# EUROPÄISCHE PATENTSCHRIFT

(11) **EP 1 325 951 B1**
(45) Veröffentlichungstag und Bekanntmachung des Hinweises auf die Patenterteilung: **17.09.2003**
(21) Anmeldenummer: 01130691.7
(22) Anmeldetag: 21.12.2001
(51) Int. Cl.: C12C 7/17

(54) **Läuterbottich**
Lauter tun
Cuve filtre

(43) Veröffentlichungstag der Anmeldung: 09.07.2003
(73) Patentinhaber: Anton Steinecker Maschinenfabrik GmbH, 85356 Freising-Attaching (DE)
(72) Erfinder: Stippler, Kurt, Dr.-Ing., 85417 Marzling (DE); Wasmuht, Klaus-Karl, 92792 Ellingen (DE)
(74) Vertreter: Grünecker, Kinkeldey, Stockmair & Schwanhäusser Anwaltssozietät

(56) Entgegenhaltungen:
- DE-A- 3 829 924
- DE-A- 19 634 012
- DE-B- 1 005 918
- DE-C- 15 439
- DE-C- 953 785
- DE-C- 3 615 439
- DE-C- 4 401 543

## Beschreibung

Die Erfindung betrifft einen Läuterbottich nach dem Oberbegriff des Anspruchs 1.

Läuterbottiche werden bei der Bierherstellung eingesetzt, um aus Maische die Würze zu gewinnen. Läuterbottiche haben üblicherweise einen im Wesentlichen runden Grundriss und messen im Durchmesser mehrere Meter. In der Mitte des Läuterbottichs ist eine zentrale Antriebswelle für die Aufhack- und Austrebereinrichtung vorgesehen, die Aufhackmesser auf Kreisbahnen durch den Läuterbottich bewegt.

Für die Konstruktion und Funktion eines Läuterbottichs kommt es immer mehr darauf an, dass in möglichst kurzer Zeit und mit möglichst geringem Platzbedarf möglichst schnell ein möglichst großer Teil des Extrakts aus der Maische gewonnen wird, um den steigenden Anforderungen immer höherer Sudfolgen und damit verbundenen kürzeren Abläuterzeiten nachkommen zu können.

Bei bekannten Läuterbottichen hat sich herausgestellt, dass wegen der niedrigeren Geschwindigkeit der Aufhackmesser in der Nähe der zentralen Welle in diesem Bereich Aufhackvorgänge nicht so effektiv sind wie in radial weiter außen liegenden Bereichen, so dass in den innerer Bereichen im allgemeinen ein höherer Anteil auswaschbaren Restextrakts verbleibt. Die Ausbeute ist dort also geringer. Weiterhin ergibt sich durch die segmentartige Konstruktion des Senkbodens des Läuterbottichs in der Nähe der zentralen Welle durch Träger und Randleisten der Senkbodensegmente eine relativ große nicht nutzbaren Läuterfläche.

Aus der DE 39 10 149 ist beispielsweise eine Läuterbottichanlage bekannt, bei der der Innenraum des Läuterbottichs in eine Mehrzahl von Kammern unterteilt wird, um so an dem Außenumfang jeder Kammer eine eigene Zargenläuterfläche vorzusehen, so dass insgesamt die Läuterfläche vergrößert wird und damit die Abläuterzeit vermindert wird. Nachteilig bei einer derartigen Vorrichtung ist der hohe konstruktive Aufwand, der mit der Unterteilung des Innenraums in den Kammern verbunden ist.

Ringförmige Läuterbottiche, die im Innenraum nach einen festen Boden abgeschlossen sind, sind aus DE 953 785 und DE 1 005 918 bekannt.

Weiterhin sind aus der DE 36 40 811, DE 38 29 924 und der DE 44 01 543 Sudwerke bzw. Sudwerksanlagen bekannt, bei denen eine Kombination aus einem ringförmigen Läuterbottichbereich und einem in der Mitte des Läuterbottichbereichs angeordneten Maischebottichbereichs oder einem dort vorgesehenen Maischwürzepfannenbereichs vorgesehen ist Die Bereiche sind durch Trennwände voneinander getrennt. Solche kompakten Kombisudanlagen sind nur in speziellen Fällen im Einsatz und nicht für hohe Leistungen ausgelegt. Einzelne Läuterbottiche, die mit separaten Würzepfannen und separaten Maischebottichen zu verschalten sind, um die es bei der Erfindung geht und mit denen hohe Läuterleistungen erzielbar sind, sind dort nicht offenbart.

Nachteilig bei derartigen Anlagen ist auch, dass durch die Anordnung eines Maischebottichbereichs oder eines Maischewürzepfannenbereichs in der Mitte des ringförmigen Läuterbottichbereichs die Antriebseinrichtungen für die Aufhack- und Austrebereinrichtung oberhalb des Läuterbottichbereichs angeordnet werden müssen. Weiterhin müssen Zuleitungen zu dem Läuterbottichbereich außen angebracht werden. Darüber hinaus ist der Platzbedarf des Maischebottichbereichs oder des Maischewürzepfannenbereichs recht groß, so dass der Läuterbottichbereich selbst recht klein ist. Die in den drei Druckschriften vorgeschlagenen Kombisudwerke sind deshalb nur für kleine und kompakte Brauereien gedacht.

Aufgabe der vorliegenden Erfindung ist es, einen zur Verschaltung mit externen Maische/ und oder Würzepfannen geeigneten, einzelnen Läuterbottich zu schaffen, der unter Verbesserung der Ausbeute hohe Leistungen ermöglicht.

Die Aufgabe wird durch einen Läuterbottich mit den Merkmalen des Anspruchs 1 gelöst. Vorteilhafte Ausführungsformen sind in den abhängigen Ansprüchen offenbart.

Dadurch, dass der Senkboden nach innen hin durch einen inneren Durchmesser begrenzt ist, der mindestens das 0,15-fachen des äußeren Durchmessers beträgt, ergibt sich im inneren, achsnahen Bereich der Läuterbottichs ein Freiraum, der nicht zum Abläutem verwendet wird. Die dadurch an sich gegenüber vergleichbaren Läuterbottichen verringerte Gesamtabläuterfläche kann durch eine geringe Außendurchmesservergrößerung wieder zurückgewonnen werden, mit anderen Worten wird dann die Senkbodenfläche, die sich bei herkömmlichen Läuterbottichen nahe der zentralen Welle befindet, weggenommen und im Randbereich des Läuterbottichs hinzugefügt. Somit wird die innere. weniger effiziente Senkbodenfläche reduziert und in einem effizienteren Teil des Läuterbottichs hinzugefügt.

Mit einem so ausgebildeten Läuterbottich ist es möglich, das Abläutem unter gleichzeitiger Erhöhung der Ausbeute schneller durchzuführen. Auch kann z.B. ein feineres Schrot für die Maische verwendet werden, so dass die Extraktausbeute weiter gesteigert werden kann. Auch das Austrebem kann schneller erfolgen. Darüber hinaus ergeben sich auch konstruktive Vorteile, da die in der Fertigung besonders aufwendigen, spitz zulaufenden inneren Senkbodenelemente herkömmlicher Läuterbottiche entfallen können.

Schließlich erlaubt es die ringförmige Ausbildung der Läuterfläche in der Mitte des Läuterbottichs Platz zu schaffen für Antriebseinrichtungen, Zu- und Ableitungen oder Zugang für Wartungsarbeiten des Läuterbottichs.

Dadurch, dass der zentrale Freiraum in der Mitte des Läuterbottichs geschaffen wird, können z.B. auch Anschlüsse, die üblicherweise außen an Läuterbottichen angebracht sind, nach innen verlegt werden. Auch kann der Antrieb der Aufhack- und Austrebereinrichtung unterhalb des Läuterbottichs oder in dem Freiraum vorgesehen sein, was aus statischen Gründen wegen des hohen Gewichts des Motors bzw. des Getriebes zu bevorzugen ist.

Weiterhin kann der zentral angeordnete Freiraum für einen Maischeverteiler verwendet werden, der vorteilhafterweise über Maischeverteilerstutzen mit dem Innenraum des Läuterbottichs verbunden ist. Durch eine geeignete Neigung der Maischeverteilerstutzen gegenüber der Waagerechten von ungefähr 20 bis 25° kann die Maische optimal in dem Innenraum des Läuterbottichs eingebracht werden, wobei durch die Ringform des Läuterbottichs die Wege kurz sind.

Eine Ausgestaltung des erfindungsgemäßen Läuterbottichs soll anhand der beiliegenden Figuren erläutert werden. Dabei zeigt:
- Figur 1: schematische Darstellung des Läuterbottichbodens gemäß einer Ausführungsform der Erfindung,
- Figur 2: eine dreidimensionale schematische Ansicht einer Ausführungsform der Erfindung,
- Figur 3: eine schematische Schnittansicht einer Ausführungsform der Erfindung.

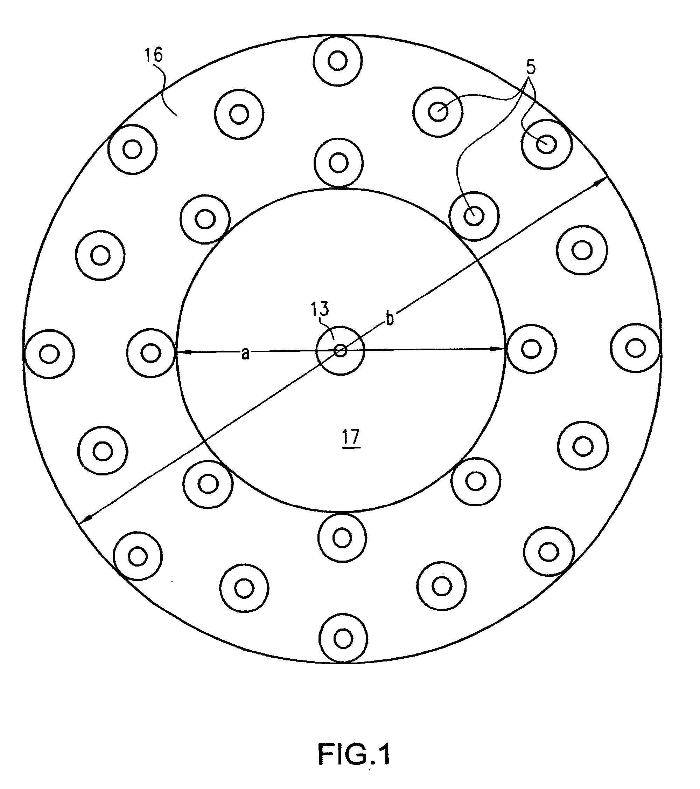

In Figur 1 ist der Läuterbottichboden 16 eines erfindungsgemäßen Läuterbottichs schematisch gezeigt. Der Läuterbottichboden 16 ist ringförmig und hat einen inneren Durchmesser a sowie einen äußeren Durchmesser b. Der innere Durchmesser a misst mehr als das 0,15-fache des Durchmessers b. Der Bereich 17 um die zentralen Welle 13 herum innerhalb des Durchmessers a ist ein Freiraum, der nicht zum Abläutem verwendet wird.

In dem Läuterbottichboden 16 ist eine beispielhafte Anordnung von Tulpen 5 schematisch gezeigt. Durch die Tulpen 5 fließt die gewonnene Würze aus dem Läuterbottich 1 ab. Die Tulpen sind auf drei konzentrisch angeordneten Kreisen angeordnet, wodurch sich ein optimaler Würzeabfluss ergibt.

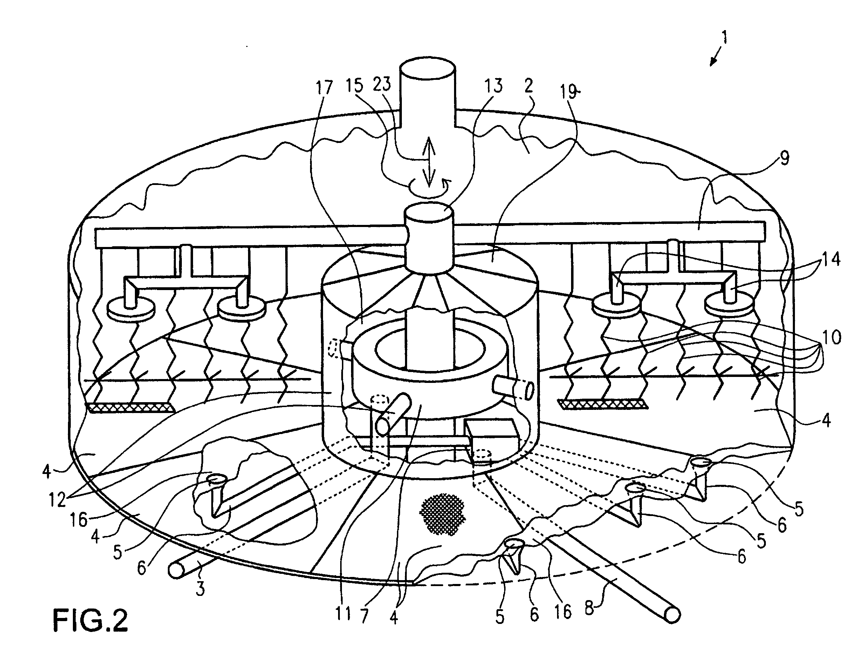

Der Läuterbottichboden 16 ist - in derselben Form - vom eigentlichen Senkboden 4 abgedeckt, wie das in Fig. 2 angedeutet ist.

Die im Innenraum 17 gegenüber herkömmlichen Läuterbottichen wegfallende Läuterfläche lässt sich durch eine nur geringfügige Durchmesservergrößerung des äußeren Durchmessers b wiedergewinnen. Wenn z.B. bei einem Läuterbottich herkömmlicher Bauart mit einem Außendurchmesser von ca. 6.00 m ein innerer Freiraum 17 von ca. 2.30 m Durchmesser geschaffen werden soll, muss der Außendurchmesser b um lediglich ca. 40 cm vergrößert werden, wenn man flächenmäßig dieselbe Abläuterfläche erhalten will. Für viele Fälle wird es aber auch genügen, eine geringer Vergrößerung vorzusehen, da sowohl Ausbeute als auch die Abläuterleistung in den radial äußeren Bereichen ohnehin besser ist.

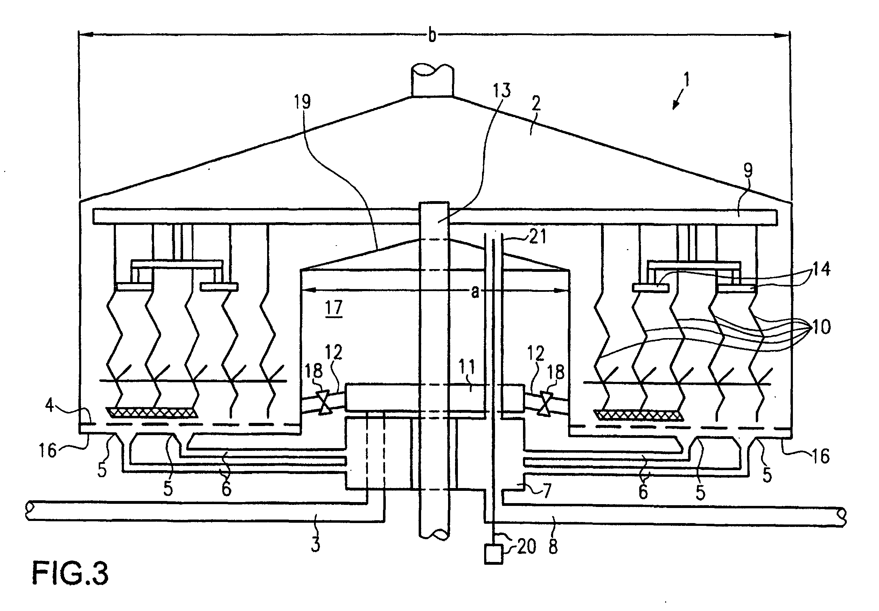

In den Figuren 2 und 3 ist nun ein konkreteres Ausführungsbeispiel eines erfindungsgemäßen Läuterbottichs 1 dargestellt Der Läuterbottich 1 hat einen Maischezulauf 3, der in einem Maischeverteiler 11 endet. Der Maischeverteiler 11 ist in dem zentralen Freiraum 17 des Läuterbottichs 1 angeordnet. Der zentrale Freiraum 17 ist um eine zentrale Antriebswelle 13 herum angeordnet und vom eigentlichen Läuterinnenraum 2 des Läuterbottichs 1 umgeben. Der Maischeverteiler 11 ist hierbei ringförmig ausgebildet und umgibt ebenfalls die zentrale Antriebswelle 13. Von dem Maischeverteiler 11 gehen Maischezulaufstutzen 12 ab, die in den Innenraum 2 münden.

Während in Figur 2 eine ganze Reihe von Maischezulaufstutzen 12 gezeigt sind, können auch nur einige wenige, z.B. zwei Zulaufstutzen vorhanden sein. Auch ist es möglich, ganz auf den Maischeverteiler 11 zu verzichten und die Maischezuleitung 3 direkt in den Innenraum 2 des Läuterbottichs 1 münden zu lassen, wobei dies von der Seite des zentralen Freiraums 17 aus geschieht.

Die Maischezulaufstutzen 12 und/oder die Maischezuleitung 3 sind vorteilhafterweise absperrbar, z.B. durch Ventile 18, wie sie in Figur 3 schematisch dargestellt sind.

Der zentrale Freiraum 17 des Läuterbottichs 1 ist hier zylindrisch ausgebildet und weist ein geneigtes oberes Dach 19 auf. Durch das Dach 19 tritt die zentrale Antriebswelle 13 hindurch. Der zentrale Freiraum 17 ist nach unten offen.

Die untere Begrenzung des Innenraums 2 des Läuterbottichs 1 ist durch Senkbodensegmente gegeben, die zusammengenommen den Senkboden 4 darstellen. Im vorderen Teil der Figur 2 ist die Siebstruktur des Senkbodens 4 durch eine teilweise Schraffur angedeutet. Unterhalb des Senkbodens 4 befindet sich der Läuterbottichboden 16, der dieselbe runde Form und annähernd die gleichen Abmessungen wie der Senkboden 4 hat. Die Senkbodensegmente werden z.B. durch Auflageleisten, Stützfüßchen oder dgl., die zwischen den Senkbodensegmenten und dem Läuterbottichboden 16 angeordnet sind, von dem Läuterbottichboden 16 beabstandet gehalten.

In dem Innenraum 2 des Läuterbottichs 1 ist weiterhin eine Aufhack- und Austrebereinrichtung 9 mit Aufhackmessem 10 gezeigt. Weiterhin sind Sprüheinrichtungen 14 z. B. zum Anschwänzen vorgesehen. Die Aufhack- und Austrebereinrichtung 9 wird durch die zentrale Antriebswelle 13 in Drehung 15 versetzt und kann in Richtung 23 angehoben oder abgesenkt werden, um die Schnittiefe der Hackmesser 10 zu bestimmen.

Im Läuterbottichboden 16 sind schematisch dargestellte Tulpen 5 angeordnet, die die Würze, die durch den Senkboden 4 durchtritt, ableiten. Über Würzeleitungen 6 wird die Würze zu einem Würzesammelbehälter 7 geführt. In Figur 2 ist nur eine Auswahl derartiger Tulpen 5 mit Würzeleitungen 6 gezeigt. Je nach Größe des Läuterbottichs 1 können, wie z. B. in Figur 1 dargestellt, mehr oder weniger Tulpen 5 vorgesehen sein. Als Richtwert kann angegeben werden, dass pro qm. Senkbodenfläche eine Tulpe vorhanden ist.

Auch der Würzesammelbehälter 7 ist in oder unterhalb des zentralen Freiraums 17 angeordnet. Die Würzesammelbehälter 7 hat weiterhin einen Ablauf 8, um die gesammelte Würze abzuführen. Während der Würzesammelbehälter 7 in Figur 2 nur auf einer Seite der zentralen Antriebsachse 13 vorgesehen ist, kann er auch, wie in Figur 3 gezeigt, ringförmig die Achse 13 umgeben.

Durch das Anordnen eines zentralen Würzesammelbehälters 7 werden die Längen der Würzeleitungen 6 kurz gehalten, so dass ein Verwässern der Vorderwürze durch Wasser, das sich in den Würzeleitungen 6 befindet, vermieden wird.

In Figur 3 ist der Durchmesser a des zentralen Freiraums 17, der ebenso groß wie der erste innere Durchmesser ist, sowie der zweite äußere Durchmesser b des Senkbodens 4 nochmals angegeben. Das Verhältnis a/b ist hier deutlich größer als 0,15. Vorteilhaft ist beispielsweise ein Verhältnis von ungefähr 0,3.

In Fig. 3 ist eine Niveauerfassungseinrichtung dargestellt, die eine Niveausonde 20 und ein Rohr 21 umfasst. Die Niveauerfassungseinrichtung kann auch jede beliebige Einrichtung sein, die es erlaubt, das Niveau in dem Innenraum 2 zu erfassen. Bei der Ausführungsform mit dem Rohr ist das Rohr 21 mit dem Innenraum 2 des Läuterbottichs flüssigkeitsdurchgängig verbunden. Das Rohr 21 ist hierbei zu einem Teil in dem zentralen Freiraum 17 angeordnet, um so keinen Platz außerhalb des Läuterbottichs zu belegen, und kann auch das geneigte Dach 19 nach oben durchstoßen. Das untere Ende des Rohr endet in dem Würzesammelbehälter 7 oder, wie in Fig. 3 dargestellt, in dem Ablauf 8. Das Rohr 21 kann den Maischeverteiler 11 durchstoßen oder auch an ihm vorbei geführt werden (falls ein Maischeverteiler 11 vorgesehen ist).

## Patentansprüche

1. Läuterbottich (1) mit einem für die Aufnahme von Maische vorgesehenen Innenraum (2), der einen Siebboden (4) zum Abziehen der Würze hat, der
- ringförmig ausgebildet ist und
- einen ersten inneren Durchmesser (a) und
- einen zweiten äußeren Durchmesser (b) hat, wobei
innerhalb des inneren Durchmessers nicht abgeläutert wird und wobei das Verhältnis (a/b) zwischen erstem (a) und zweitem (b) Durchmesser bei mindestens 0,15 liegt und innerhalb des ersten Durchmessers (a) ein zentraler Freiraum (17) vorhanden ist, in dem Anschlüsse (12) des Innenraums (2) für Maische und ein Maischeverteiler (11) vorgesehen sind.

2. Läuterbottich (1) nach Anspruch 1,
**dadurch gekennzeichnet, dass**
das Verhältnis zwischen erstem (a) und zweitem (b) Durchmesser bei mindestens 0,2, bevorzugterweise bei mindestens 0,3 und noch bevorzugterweise bei mindestens 0,4 liegt.

3. Läuterbottich (1) nach Anspruch 1 oder 2,
**dadurch gekennzeichnet, dass**
das Verhältnis zwischen erstem (a) und zweitem (b) Durchmesser maximal 0,5 ist.

4. Läuterbottich (1) nach Anspruch 1,
**dadurch gekennzeichnet, dass**
der Maischeverteiler (11) im Wesentlichen ringförmig um eine zentrale Antriebsachse (13) der Aufhack- und/oder Austrebereinrichtung (9, 10) angeordnet ist.

5. Läuterbottich (1) nach einem der Ansprüche 3 oder 4,
**dadurch gekennzeichnet, dass**
verschließbare Maischeverteilerstutzen (12) zwischen Innenraum (2) und Maischeverteiler (11) vorgesehen sind, die vorzugsweise nach außen hin nach unten geneigt sind.

6. Läuterbottich (1) nach einem der Ansprüche 1 bis 5,
**dadurch gekennzeichnet, dass**
in und/oder unterhalb des zentralen Freiraums (17) ein Läuterwürzesammelbehälter (7) vorgesehen ist.

7. Läuterbottich (1) nach einem der Ansprüche 1 bis 6,
**dadurch gekennzeichnet, dass**
der zentrale Freiraum (17) nach oben hin durch ein geneigtes Dach (19) begrenzt ist.

8. Läuterbottich (1) nach einem der Ansprüche 1 bis 7,
**dadurch gekennzeichnet, dass**
eine Antriebseinrichtung der Aufhack- und/oder Austrebereinrichtung (9) in und/oder unterhalb des zentralen Freiraums (17) angeordnet ist

9. Läuterbottich (1) nach einem der Ansprüche 1 bis 8,
**dadurch gekennzeichnet, dass**
eine Niveauerfassungseinrichtung mit vorzugsweise einer Niveausonde (20) und vorzugsweise einem Rohr (21) vorgesehen ist, die wenigstens teilweise in dem zentralen Freiraum (17) angeordnet ist.

## Claims

1. Clarifying vat (1) with an interior (2) which is envisaged for accommodating mash and has a strainer base (4) for withdrawing the wort, the clarifying vat
- being of annular design and having
- a first, internal diameter (a) and
- a second, external diameter (b), it being the case that
clarification does not take place within the internal diameter, and that the ratio (a/b) between the first (a) and second (b) diameters is at least 0.15, and provided within the first diameter (a) is a central clearance (17) in which are provided connections (12) of the interior (2) for mash and a mash distributor (11).

2. Clarifying vat (1) according to Claim 1, **characterized in that** the ratio between the first (a) and second (b) diameters is at least 0.2, preferably at least 0.3, and more preferably at least 0.4.

3. Clarifying vat (1) according to Claim 1 or 2, **characterized in that** the ratio between the first (a) and second (b) diameters is not more than 0.5.

4. Clarifying vat (1) according to Claim 1, **characterized in that** the mash distributor (11) is arranged in an essentially annular manner around a central drive spindle (13) of the chopping and/or grains-removing arrangement (9, 10).

5. Clarifying vat (1) according to either of Claims 3 and 4, **characterized in that** closeable mash-distributor connectors (12), which are preferably inclined downwards in the outward direction, are provided between the interior (2) and mash distributor (11).

6. Clarifying vat (1) according to one of Claims 1 to 5, **characterized in that** a wort-collecting container (7) is provided in and/or beneath the central clearance (17).

7. Clarifying vat (1) according to one of Claims 1 to 6, **characterized in that** the central clearance (17) is bounded in the upward direction by an inclined roof (19).

8. Clarifying vat (1) according to one of Claims 1 to 7, **characterized in that** a drive arrangement of the chopping and/or grains-removing arrangement (9) is arranged in and/or beneath the central clearance (17).

9. Clarifying vat (1) according to one of Claims 1 to 8, **characterized in that** there is provided a level-sensing arrangement with preferably a level probe (20) and preferably a tube (21), this being arranged, at least in part, in the central clearance (17).

## Revendications

1. Cuve filtre. (1) comportant un espace intérieur (2) prévu pour recevoir la trempe, qui comporte un fond filtrant (4) pour extraire le moût, qui
- est réalisé sous forme annulaire et
- présente un premier diamètre (a) intérieur et
- un second diamètre (b) extérieur,
aucune filtration n'ayant lieu à l'intérieur du diamètre intérieur et le rapport (a/b) entre le premier (a) et le second (b) diamètres étant d'au minimum 0,15 et un espace libre central (17) existant à l'intérieur du premier diamètre (a), dans lequel sont prévues des tubulures (12) de l'espace intérieur (2) pour trempe et un distributeur de trempe (11).

2. Cuve filtre (1) selon la revendication 1,
**caractérisée en ce que**
le rapport entre le premier (a) et le second (b) diamètres est d'au moins 0,2, de préférence d'au moins 0,3 et encore de préférence d'au moins 0,4.

3. Cuve filtre (1) selon la revendication 1 ou 2,
**caractérisée en ce que**
le rapport entre le premier (a) et le second (b) diamètres est d'au maximum 0,5.

4. Cuve filtre (1) selon la revendication 1,
**caractérisée en ce que**
le distributeur de trempe (11) est disposé essentiellement sous forme annulaire autour d'un axe d'entraînement central (13) du dispositif de hachage et/ou de séparation de drêche (9, 10).

5. Cuve filtre (1) selon l'une des revendications 3 ou 4,
**caractérisée en ce que**
des tubulures de distribution de trempe (12) obturables, qui vers l'extérieur sont de préférence inclinées vers le bas, sont prévues entre l'espace intérieur (2) et le distributeur de trempe (11).

6. Cuve filtre (1) selon l'une des revendications 1 à 5,
**caractérisée en ce que**
une cuve de récupération de moût filtré (7) est prévue dans et/ou sous l'espace libre central (12).

7. Cuve filtre (1) selon l'une des revendications 1 à 6,
**caractérisée en ce que**
l'espace libre central (17) est limité vers le haut par un toit incliné (19).

8. Cuve filtre (1) selon l'une des revendications 1 à 7,
**caractérisée en ce que**
un dispositif d'entraînement du dispositif de hachage et/ou de séparation de drêche (9) est disposé dans et/ou sous l'espace libre central (17).

9. Cuve filtre (1) selon l'une des revendications 1 à 8,
**caractérisés en ce que**
est prévu un dispositif de détection de niveau, comportant de préférence une sonde de niveau (20) et de préférence un tube (21), qui est disposé au moins partiellement dans l'espace libre central (17).
